# EUROPÄISCHE PATENTSCHRIFT

(11) **EP 2 512 795 B1**
(45) Veröffentlichungstag und Bekanntmachung des Hinweises auf die Patenterteilung: **25.02.2015**
(21) Anmeldenummer: 10790527.5
(22) Anmeldetag: 08.12.2010
(51) Int. Cl.: B32B 3/10, G06K 19/00

(54) **DATENTRÄGERKARTE UND VERFAHREN ZUR HERSTELLUNG EINER DATENTRÄGERKARTE**
DATA CARRIER CARD AND METHOD FOR PRODUCING A DATA CARRIER CARD
CARTE SUPPORT DE DONNÉES ET PROCÉDÉ DE PRODUCTION D'UNE CARTE SUPPORT DE DONNÉES

(30) Priorität: 18.12.2009 DE 102009058803
(43) Veröffentlichungstag der Anmeldung: 24.10.2012
(73) Patentinhaber: Giesecke & Devrient GmbH, 81677 München (DE)
(72) Erfinder: RIEDL, Josef, 85395 Attenkirchen (DE)
(86) Internationale Anmeldenummer: PCT/EP2010/007464
(87) Internationale Veröffentlichungsnummer: WO 2011/072818

(56) Entgegenhaltungen:
- EP-A1- 2 116 366
- WO-A2-2009/153056

## Beschreibung

Die Erfindung betrifft eine Datenträgerkarte, insbesondere eine Chip- und/oder Magnetstreifenkarte, sowie ein Verfahren zur Herstellung einer Datenträgerkarte.

Datenträgerkarten werden heutzutage meist aus Kunststofffolien gefertigt, beispielsweise indem mehrere Folien miteinander laminiert werden, um einen Kartenkörper zu bilden, wobei der Kartenkörper in der Regel aus den Folien ausgestanzt wird und anschließend weiterverarbeitet wird, um auf dem Kartenkörper ein entsprechendes Datenspeicher- bzw. Datenverarbeitungsmittel, insbesondere in der Form eines Mikrochips oder eines Magnetstreifens, vorzusehen.

Allgemein können Kunststofffolien durch Extrusionsverfahren hergestellt werden, bei denen ein Schmelzestrom aus Kunststoffmaterial in einem Extruder aufgeschmolzen wird und zur Bildung der Folie durch eine Düse gepresst wird.

In der Druckschrift DE 10 2004 013 201 A1 ist ein sog. Coextrusionsverfahren beschrieben, bei dem zumindest zwei polymere Schmelzeströme mit unterschiedlicher Zusammensetzung zusammengeführt werden, um hierdurch Folien mit Bereichen unterschiedlicher Materialeigenschaften herzustellen.

In der Druckschrift GB 2 348 394 A ist ein weiteres Verfahren zur Coextrusion beschrieben, bei dem eine Folie aus Längsstreifen mit unterschiedlichen Farben zwischen einer unteren und einer oberen Schicht gebildet wird.

Aus der unveröffentlichten deutschen Patentanmeldung DE 102008029433.0 ist eine Datenträgerkarte bekannt, die eine zwei Flächenbereiche mit verschiednen Materialeigenschaften aufweisende Folie enthält. Die Folie wird durch Coextrusion hergestellt.

Bei der Herstellung von herkömmlichen Datenträgerkarten besteht das Problem, dass Bereiche mit unterschiedlichen Materialeigenschaften, wie z.B. farblich unterschiedlich ausgestaltete Gebiete, in separaten Verarbeitungsschritten, z.B. durch drucktechnische Maßnahmen, erzeugt werden müssen, wodurch sich die Herstellung solcher Datenträgerkarten aufwendig gestaltet.

Aufgabe der Erfindung ist es deshalb, einen Kartenkörper anzugeben, mit dem ein tragbarer Datenträger herstellbar ist, der Flächenbereiche mit verschiedenen Materialeigenschaften aufweist.

Diese Aufgabe wird durch einen Kartenkörper gemäß dem unabhängigen Patentanspruch 1 sowie einen tragbaren Datenträger gemäß dem Anspruch 9 gelöst. Weiterbildungen der Erfindung sind in den abhängigen Ansprüchen definiert.

Der erfindungsgemäße Kartenkörper umfasst eine oder mehrere Folien, wobei zumindest eine Folie eine coextrudierte Folie ist, welche zumindest zwei Bereiche mit unterschiedlichen Materialeigenschaften aufweist. Der Erfindung liegt die Erkenntnis zugrunde, dass durch Coextrusion hergestellte Folien in geeigneter Weise für tragbare Datenträger verwendet werden können, um Bereiche mit unterschiedlichen Materialeigenschaften, insbesondere verschiedene Flächenbereiche, zu bilden. Auf diese Weise können separate Verarbeitungsschritte zur Bildung von Bereichen mit unterschiedlichen Eigenschaften weggelassen werden.

Der Kartenkörper weist in einer bevorzugten Variante mehrere, übereinander liegende Folien auf, welche miteinander laminiert sind bzw. insgesamt durch Coextrusion ausgebildet sind. Zumindest eine der Folien ist dabei eine coextrudierte Folie, wobei jedoch auch die gesamte Schichtanordnung durch Coextrusion gebildet werden kann, so dass die Schichtanordnung in diesem Fall auch mit einer einzigen coextrudierten Folie gleichgesetzt werden kann, welche Bereiche mit unterschiedlichen Eigenschaften in Richtung der Dicke der Folie und vorzugsweise auch in der Fläche der Folie aufweist.

In einer weiteren Ausgestaltung der Erfindung weist der Kartenkörper ebenfalls mehrere, übereinander liegende Folien auf, wobei zumindest ein Teil der Folien vollflächig aus einem Material gebildet sind und auf zumindest einer Seite der coextrudierten Folie angeordnet sind. Auf diese Weise kann die Stabilität des Kartenkörpers erhöht werden. Die vollflächig aus einem Material gebildeten Folien können dabei transmittierende oder opake Folien sein, wobei unter transmittierend sowohl vollkommen lichtdurchlässig, d.h. transparent, als auch teilweise lichtdurchlässig, d.h. transluzent, zu verstehen ist.

In einer besonders bevorzugten Ausführungsform sind die zumindest zwei Bereiche der coextrudierten Folien bzw. zumindest einer coextrudierten Folie aus unterschiedlichen Materialien gebildet. Ebenso können die zumindest zwei Bereiche aus dem gleichen Basismaterial mit unterschiedlichen Zusatzstoffen gebildet sein. Die verschiedenen Bereiche mit unterschiedlichen Materialeigenschaften können sich insbesondere in ihren optischen Eigenschaften unterscheiden. Beispielsweise kann zumindest ein Bereich der zumindest zwei Bereiche einer coextrudierten Folie opak sein und zumindest ein anderer Bereich der zumindest zwei Bereiche der coextrudierten Folie kann transmittierend, insbesondere transparent bzw. transluzent, sein. Die optischen Eigenschaften der Bereiche können sich auch im Hinblick auf ihre Polarisationseigenschaften unterscheiden. Insbesondere kann zumindest ein Bereich der zumindest zwei Bereiche polarisierend sein, so dass er nur Licht mit einer vorbestimmten Polarisation durchlässt. Auf diese Weise können besonders einfach verschiedene optische Effekte im Kartenkörper erzeugt werden.

In einer besonders bevorzugten Ausführungsform des erfindungsgemäßen Kartenkörpers ist zumindest ein Bereich der zumindest zwei Flächenbereiche der zumindest einen coextrudierten Folie aus elastischerem und/ oder strapazierfähigerem Material als zumindest ein anderer Flächenbereich der zumindest zwei Flächenbereiche der coextrudierten Folie gebildet. Wird die Datenträgerkarte beispielsweise später in einem elektronischen Identifikationsbuch zur Identifikation einer Person verwendet, ist insbesondere ein an der Nahtstelle des späteren Identifikationsbuchs liegender Bereich der oder zumindest einer coextrudierten Folie elastischer als ein nicht an der Nahtstelle des späteren Identifikationsbuchs liegender Bereich der coextrudierten Folie. Auf diese Weise wird eine hohe Stabilität des Identifikationsbuchs in einem Bereich gewährleistet, in dem sich vorzugsweise die relevanten Identifikationsdaten befinden (d.h. entfernt von der Nahtstelle), wobei gleichzeitig eine gute Handhabung des Identifikationsbuchs beim Umblättern durch den elastischen Bereich an der Nahtstelle gewährleistet ist.

Die verschiedenen Bereiche der bzw. zumindest einer coextrudierten Folie können aus beliebigen Kunststoffen gebildet sein. Vorzugsweise werden hierzu ein oder mehrere der folgenden Materialien verwendet: Polycarbonat, PET (PET = Polyethylenterephthalat), PETG (PETG = Polyethylenterephthalat-Glykol), TPE (TPE = thermoplastisches Elastomer), TPU (TPU = thermoplastisches Elastomer auf Urethanbasis), Polyolefine, PA (PA = Polyamid), PVC (PVC = Polyvinylchlorid), ABS (ABS = AcrylnitrilButadien-Styrol-Copolymerisat).

In dem erfindungsgemäßen Kartenkörper können ferner die Übergänge zwischen zwei benachbarten Bereichen der bzw. zumindest einer coextrudierten Folie beliebig ausgeführt sein, insbesondere scharf und/ oder auch fließend, wobei sich entlang eines Übergangs die Eigenschaften des Übergangs auch verändern können.

In einer besonders bevorzugten Ausführungsform des erfindungsgemäßen Kartenkörpers sind eine oder mehrere coextrudierte Folien mit jeweils zumindest einem opaken Bereich und zumindest einem transmittierenden Bereich derart ausgestaltet und/ oder übereinander angeordnet, dass der Kartenkörper zumindest ein transmittierendes Fenster und/ oder zumindest einen transmittierenden Fensterstreifen aufweist. Hierdurch kann auf einfache Weise ein Fensterbereich ohne zusätzliche Verarbeitungsschritte gebildet werden. Das Fenster bzw. der Fensterstreifen kann sich dabei durch den gesamten Kartenkörper hindurch erstrecken, jedoch sind auch Fenster bzw. Fensterstreifen denkbar, die nicht durch die gesamte Dicke des Kartenkörpers hindurchgehen, sondern an einem opaken Bereich einer Folie enden.

In einer weiteren Ausgestaltung der Erfindung umfasst die coextrudierte Folie bzw. zumindest eine coextrudierte Folie eine Mehrzahl von sich abwechselnden Streifen, beispielsweise Längsstreifen, mit unterschiedlichen Materialeigenschaften. Insbesondere können sich in der coextrudierten Folie opaken Streifen und transmittierende Streifen abwechseln.

In einer weiteren Ausführungsform des erfindungsgemäßen Kartenkörpers sind zumindest ein Teil von übereinanderliegenden coextrudierten Folien mit abwechselnden opaken und transmittierenden Streifen derart angeordnet, dass durch die Anordnung das zumindest eine Fenster und/oder der zumindest eine Fensterstreifen gebildet wird. Beispielsweise kann zumindest ein Teil von übereinander liegenden coextrudierten Folien mit abwechselnden opaken und transmittierenden Streifen derart angeordnet sein, dass opake und transmittierende Streifen benachbarter Folien jeweils übereinander liegen. Das heißt, der opake Streifen einer Folie liegt genau auf bzw. unter dem opaken Streifen einer anderen benachbarten Folie und das gleiche gilt für die transmittierenden Streifen. Ebenso kann zumindest ein Teil von übereinander liegenden coextrudierten Folien derart angeordnet sein, dass opake und transmittierende Streifen benachbarter Folien versetzt und/ oder verdreht zueinander ausgerichtet sind, insbesondere verdreht um einen Winkel von 90°. Hierdurch werden vorzugsweise begrenzte Fenster innerhalb der Fläche der Folie gebildet.

Die Dicke des Kartenkörpers liegt in einer bevorzugten Variante der Erfindung zwischen 30 µm und 900 µm. Hierdurch wird eine ausreichende Stabilität des Kartenkörpers gewährleistet. In einer weiteren Ausgestaltung des erfindungsgemäßen Kartenkörpers ist die oder zumindest eine coextrudierte Folie zumindest auf einer Seite bedruckt bzw. mit einer Ablackierung versehen. Auf diese Weise können weitere optische Effekte erzeugt werden.

Neben dem oben beschriebenen Kartenkörper umfasst die Erfindung auch ein Verfahren zur Herstellung eines solchen Kartenkörpers, wobei der Kartenkörper durch Coextrusion zumindest einer Folie derart gebildet wird, dass die zumindest eine Folie zumindest zwei Bereiche mit unterschiedlichen Materialeigenschaften aufweist. Die Coextrusion erfolgt dabei insbesondere mit einer Mehrschichtdüse einer Coextrusionsanordnung und vorzugsweise bei einer Temperatur von im Wesentlichen 230 °C und mehr, insbesondere bei 250 °C. In einer weiteren Variante werden auf zumindest einer Seite der coextrudierten Folie eine oder mehrere weitere Folien durch Laminieren aufgebracht, wodurch ein mehrlagiger Kartenkörper gebildet werden kann. Das Herstellungsverfahren umfasst üblicherweise weitere Schritte, insbesondere das Ausstanzen des Kartenkörpers aus der coextrudierten Folie bzw. aus der mehrlagigen Schichtstruktur aus coextrudierter Folie und weiteren Folien, das Aufbringen eines Chips bzw. eines Magnetstreifens und dergleichen.

Ausführungsbeispiele der Erfindung werden nachfolgend anhand der beigefügten Figuren detailliert beschrieben.

Es zeigen:
- Fig. 1 bis Fig. 3: Querschnittsansichten von drei verschiedenen Ausführungsformen einer Folie zum Aufbau eines Kartenkörpers;
- Fig. 4 bis Fig. 6: vierverschiedene Ausführungsformen von Verfahren zur Herstellung der jeweiligen Folie gemäß Fig. 1 bis;
- Fig. 7: eine schematische Darstellung der Anordnung von zwei übereinanderliegenden Folien bei der Herstellung eines Kartenkörpers gemäß einer weiteren Ausführungsform der Erfindung;
- Fig. 8 und Fig. 9: perspektivische Ansichten von zwei weiteren Ausführungsformen von Kartenkörperaufbauten;
- Fig. 10: eine Aufsicht auf einen durch orthogonale Überlagerung zweier Folien aufgebauten Kartenkörper; und
- Fig. 11: eine Aufsicht auf einen aus mehreren Folien aufgebauten Kartenkörper, wobei eine innenliegende Folie eine alphanumerische Information trägt.

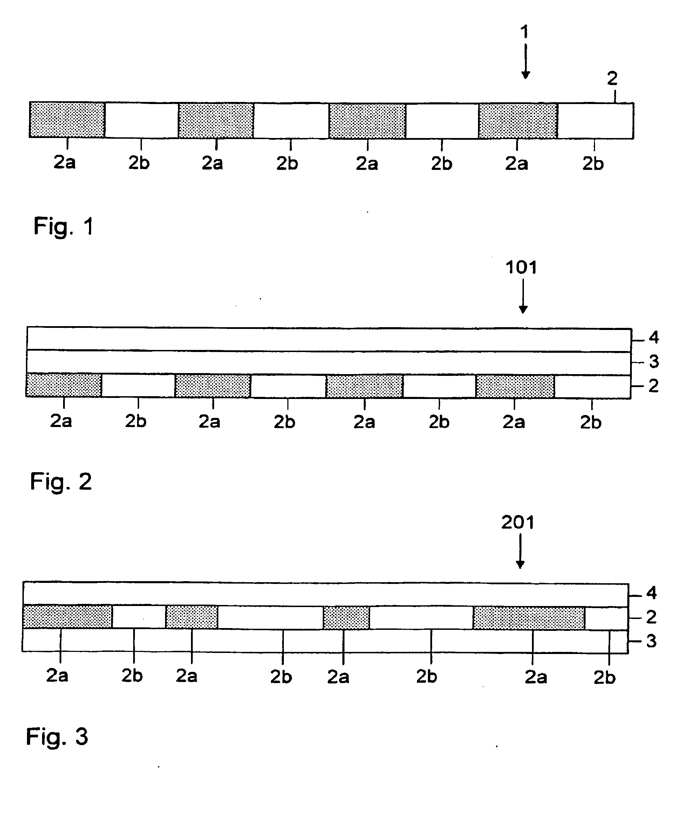

Fig. 1 zeigt im Querschnitt schematisch eine erste Ausführungsform einer coextrudierten Folie 2 zur Herstellung eines Kartenkörpers. Unter Kartenkörper wird dabei sowohl ein vollständiger Kartenkörper wie auch eine Kartenkörperschicht bzw. eine Folienstruktur verstanden, die erst in Verbindung mit weiteren Schichten zu einem fertigen Kartenkörper wird. Der Kartenkörper dient seinerseits beispielsweise zur Herstellung eines tragbaren Datenträgers im Kreditkartenformat. Dazu werden in der Regel weitere Bearbeitungsschritte an einzelnen Kartenkörperschichten und/oder am fertigen Kartenkörper vorgenommen. Beispielsweise kann in oder auf einer Kartenkörperschicht vor dem Verbinden mit weiteren Kartenkörperschichten eine Transponderanordnung ausgebildet oder der fertige Kartenkörper mit einer optischen Individualisierung versehen werden. Kartenkörper können zudem in verschiedensten Geometrien für eine Vielzahl anderer Zwecke hergestellt werden, etwa zur Nutzung als Datenseite in einem Paßbuch, zur Verwendung als Token für Authentisierungen oder zum Einbau in einen solchen Token oder zur Herstellung einer Speicherkarte für tragbare elektronische Geräte.

Im einfachsten, in Fig. 1 angedeuteten Fall ist der Kartenkörper einlagig aufgebaut und besteht nur aus einer einzelnen Folie 2. Diese Folie 2 wird in einem Coextrusionsverfahren hergestellt, bei dem mehrere, aus verschiedenen Extrudern stammende Schmelzeströme in einer Mehrschichtdüse zusammengeführt werden, so dass in der entstehenden Folie 2 verschiedene Flächenbereiche aus den unterschiedlichen Schmelzeströmen gebildet werden. Die Schmelzeströme unterscheiden sich dabei in ihren Materialeigenschaften. In der Ausführungsform gemäß Fig. 1 wird durch die Mehrschichtdüse eine Folie 2 mit einer Mehrzahl von Flächenbereichen in Form von alternierenden Längsstreifen 2a und 2b gebildet, wobei die Streifen 2a und 2b jeweils zu dem gleichen Schmelzestrom eines entsprechenden Extruders gehören. Der Schmelzestrom, aus dem sich die Streifen 2a ergeben, basiert dabei auf einem opaken Polymermaterial, was durch den gepunkteten Querschnitt in Fig. 1 und allen weiteren Figuren angedeutet ist. Zwischen zwei opaken Streifen 2a liegt ein Streifen 2b, der von einem Schmelzestrom aus transmittierenden, Polymer stammt; für das transmittierende Polymer wird nachfolgend für ein leichteres Verständnis teilweise einfach ein transparentes Material gesetzt, ohne daß damit transluzente Materialien ausgeschlossen werden sollen. Die Streifen 2a und 2b können, wie in Fig.2 angedeutet, gleichbreit sein oder unterschiedliche Breiten aufweisen. Bezüglich der geometrischen Größe der Breiten bestehen nur die durch die jeweils eingesetzte Extrusionsanlage gegebenen Grenzen. Für die Herstellung von Kartenkörpern im Kreditkartenformat liegen typische Streifenbreiten zwischen 3 und 70 mm, schmalere oder breitere Streifen sind aber ohne weiteres möglich. Die Dicke einer Folie 2 beträgt typischerweise 30 bis 900 µm. Anstelle eines opaken und eines transmittierenden Materiales können auch auf andere Weise voneinander verschiedene Polymermaterialen eingesetzt werden, etwa Materialien in verschiedenen Farben oder zwei unterschiedlich transmittierende Materialen oder ein Material mit einem Zusatzstoff und ein an gleiches Material ohne Zusatzstoff.

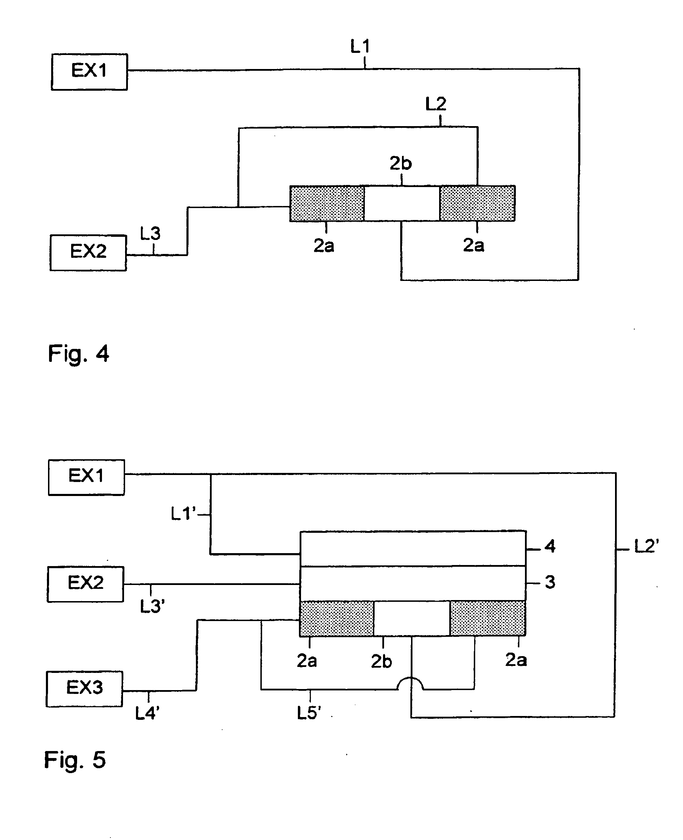

Fig. 4 zeigt schematisiert eine entsprechende Coextrusionsanordnung zur Bildung des Kartenkörpers gemäß Fig. 1. Durch den Extruder EX1 wird ein Schmelzestrom zur Bildung der transparenten Streifen 2b erzeugt, wie durch eine entsprechende Linie L1 angedeutet ist. Ferner wird durch den Extruder EX2 ein Schmelzestrom zur Bildung der opaken Streifen 2a generiert, was durch entsprechende Linien L2 und L3 angedeutet ist. Die Bildung der aneinander liegenden Streifen erfolgt mit Hilfe einer (nicht gezeigten) Mehrschichtdüse mit entsprechenden Düsenöffnungen und Zuführungen für die Schmelzeströme zur Bildung der benachbarten Streifen 2a bzw. 2b. Aus Übersichtlichkeitsgründen sind in Fig. 4 nur drei benachbarte Streifen 2 gezeigt, wobei durch mehrfache Wiederholungen von sich abwechselnden benachbarten Streifen 2a und 2b der Folienquerschnitt gemäß Fig. 1 erzeugt wird.

Coextrusionsverfahren sind im allgemeinen bekannt, weshalb hier auf eine detaillierte Beschreibung solcher Verfahren und entsprechender Parallelmehrdüsen-Extrusionsvorrichtungen zur Durchführung solcher Verfahren verzichtet wird. Nichtsdestotrotz ist die Verwendung von Coextrusionsverfahren zur Erzeugung von Flächenbereiche mit unterschiedlichen Materialeigenschaften aufweisenden Folien für Kartenkörper bisher nicht bekannt. Die Coextrusion findet vorzugsweise bei der Temperatur der Schmelzeströme von ca. 250 °C statt. Hierdurch entsteht eine homogene Folie ohne erkennbare mechanische Schwachstellen bzw. Sollbruchstellen.

Fig. 2 zeigt eine zweite Ausführungsform eines Kartenkörpers 101, der unter Verwendung einer coextrudierten Folie 2 in drei Lagen aufgebaut wurde. Der Kartenkörper 101 weist analog zu Fig. 1 eine erste Lage einer coextrudierten Folie 2 auf, welche auf die gleiche Art und Weise wie die Folie der Fig. 1 hergestellt sein kann. Im Unterschied zu dem Kartenkörper 1 der Fig. 1 sind nunmehr noch zwei weitere Lagen Folien 3 oder 4 oberhalb der Folie 2 angeordnet, wobei die Folien 3 und 4 in der Ausführungsform der Fig. 2 transparent sind und vollflächig aus dem gleichen Polymermaterial bestehen. Die Folien 3 und 4 werden vorzugsweise ebenfalls durch Extrusion hergestellt, bevorzugt durch gemeinsame Extrusion mit der Folie 2. Alternativ können die Folien 3 und 4 auch separat gefertigt und anschließend auf die Folie 2 auflaminiert werden. Die Verwendung von weiteren Folien 3 und 4 erhöht die Stabilität des Kartenkörpers 101. Die einzelnen Folien 3,4 können darüberhinaus unterschiedliche Rezepturbestandteile enthalten, z.B. Laseradditive, Sicherheitsmerkmale, optische Merkmale und dergleichen.

Die Folienstruktur gemäß Fig. 2 wird bevorzugt in einem einzelnen Coextrusionsschritt mit einer entsprechend ausgestalteten und angesteuerten Mehrschichtdüse gebildet. Eine entsprechende Coextrusionsanordnung für die Durchführung einer solchen Coextrusion ist schematisiert in Fig. 5 angedeutet. Es werden nunmehr drei Extruder EX1, EX2 und EX3 verwendet. Der Extruder EX1 erzeugt den Schmelzestrom der obersten Schicht 4 sowie die Schmelzeströme der transparenten Streifen 2b, wie durch Linien L1' und L2' angedeutet ist. Durch den Extruder EX2 wird der Schmelzestrom für die mittlere transparente Folie 3 generiert (Linie L3'). Demgegenüber erzeugt der Extruder EX3 den opaken Schmelzestrom der entsprechenden opaken Streifen 2a, wie durch Linien L4' und L5' wiedergegeben ist. Aus Übersichtlichkeitsgründen sind nur drei der Streifen der Folie 2 wiedergegeben. Die Bildung des Schmelzestroms für die oberste Folie 4 gemäß der Linie L1' ist optional und kann gegebenenfalls weggelassen werden, wodurch nur eine einzelne zusätzliche Folie 3 auf der Folie 2 ausgebildet wird. Gemäß Fig. 5 wird ein Coextrusionsverfahren realisiert, welches unterschiedliche Schmelzeströme nicht nur flächig in horizontaler Richtung, sondern auch in Richtung der Dicke des Schichtaufbaus erzeugt. Die Coextrusion umfasst somit auch die gleichzeitige Erzeugung mehrerer unterschiedlicher Folienschichten. Mittels der in Fig. 2 veranschaulichten Folienstruktur lassen sich besonders einfach Kartenkörper 101 herstellen, die einen oder mehrere von einem Rand zum anderen Rand reichende transparente Streifen aufweisen. Die transparenten Streifen können dabei ohne weiteres auch an den Rändern des Kartenkörpers 101 liegen. Zum Aufbau eines derartigen Kartenkörpers 101 kann in einfacher Weise die in Fig. 2 dargestellte Folienstruktur ein- oder beidseitig mit weiteren transparenten Schichten belegt werden, so daß die vorgegeben Stärke erreicht wird. Alternativ können mehrere gleichartige Folienstrukturen wie in Fig. 2 dargestellt übereinander gelegt werden.

Fig. 3 zeigt in Querschnittsansicht eine dritte Ausführungsform eines erfindungsgemäßen Kartenkörpers. Der Kartenkörper 201 der Fig. 3 ist dabei wiederum als mehrlagige Folienstruktur aufgebaut und entspricht im wesentlichen dem Kartenkörper 101 der Fig. 2. Die opaken und transmittierenden Streifen 2a, 2b besitzen nun jedoch variierende Breiten. Desweiteren ist die Folie 2 mit den Streifen 2a und 2b zwischen den beiden vollflächig transparenten Folien 3 und 4 angeordnet. Auch bei diesem Aufbau wird eine erhöhte mechanische Stabilität des Kartenkörpers erreicht. Analog zu Fig. 2 können die Folien 3 und 4 separat, insbesondere durch Extrusion, gefertigt werden und anschließend auf die coextrudierte Folie 2 auflaminiert werden.

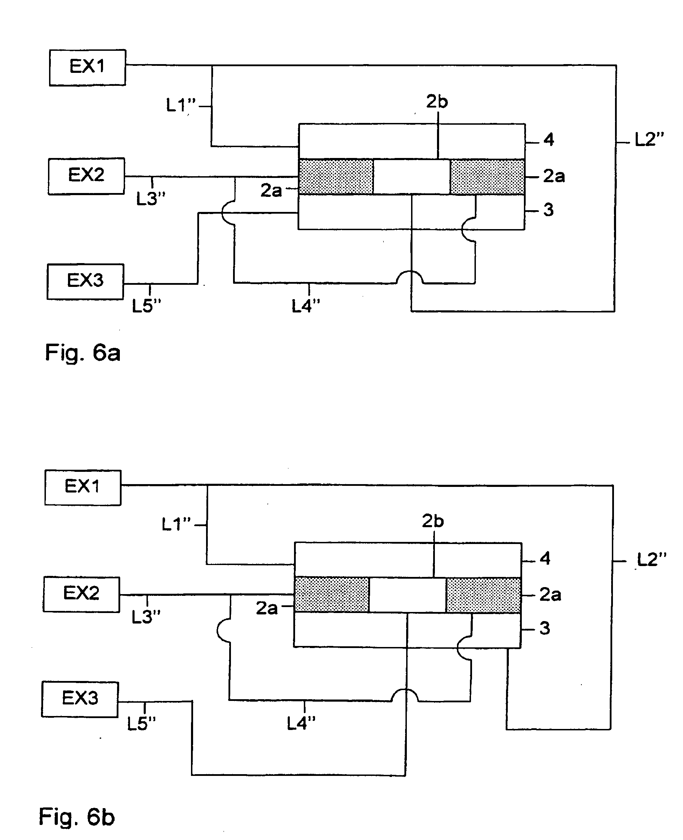

Bevorzugt wird die Folienstruktur gemäß Fig. 3 wiederum in einem einzelnen Coextrusionsschritt erzeugt. Eine hierfür vorgesehene Extrusionsanordnung ist schematisiert in den Fig. 6a und 6b wiedergegeben. Die Anordnung der Fig. 6a entspricht größtenteils der Anordnung gemäß Fig. 5. Über einen Extruder EX1 wird der Schmelzestrom zur Bildung der oberen Folienschicht 4 und der transparenten Streifen 2b der Folie 2 erzeugt, wie durch Linien L1" und L2" angedeutet ist. Der Extruder EX2 generiert den Schmelzestrom der opaken Schichten 2a der Folie 2 (Linien L3" und L4"). Im Unterschied zur Anordnung der Fig. 5 wird nunmehr durch den Extruder EX3 ein unterer Schmelzestrom unter der Folie 2 zur Bildung der Folie 3 erzeugt, wie durch die Linie L5' angedeutet ist. Die Erzeugung der unterschiedlichen Folienbereiche in vertikaler sowie in horizontaler Richtung erfolgt dabei wiederum durch eine entsprechend ausgestaltete und angesteuerte Mehrschichtdüse mit einer Vielzahl von Düsenöffnungen. Die in Fig. 6b gezeigte Anordnung unterscheidet sich von Fig. 6a, indem der vom Extruder EX1 gelieferte Schmelzestrom nun zur Erzeugung der Folienschichten 3 und 4 dient, wie durch L2" angedeutet, und der vom Extruder EX3 gelieferte Schmelzestrom zur Erzeugung der transparenten Streifen 2b, wie durch L5" angedeutet.

Kartenkörper, die mit nach dem oben beschriebenen Verfahren erzeugten Folien gemäß Fig. 1 bis Fig. 3 hergestellt werden, weisen typische Dicken von 680 µm bis 840 µm auf, wobei je nach Anwendungsfall dickere oder dünnere Folien gewählt werden können und sich die Dicken der jeweiligen Folienschichten in einem Kartenkörper auch voneinander unterscheiden können.

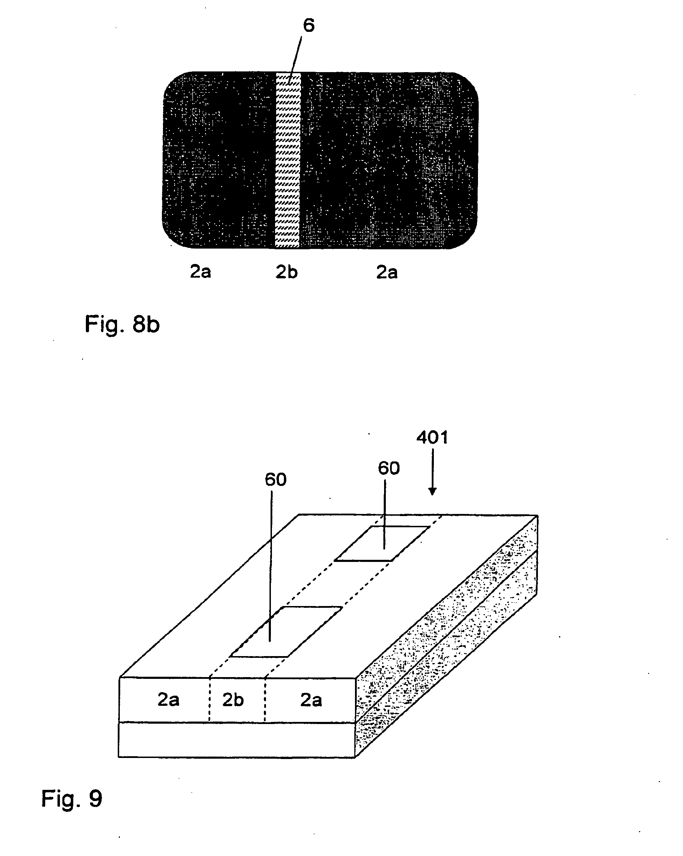

Mittels der in Fig. 1 bis Fig. 3 veranschaulichten Folien bzw. Folienstrukturen, lassen sich besonders einfach Kartenkörper 1,101, 201 herstellen, die einen oder mehrere von einem Seitenrand zu einem gegenüberliegenden Seitenrand reichenden transparente Streifen 2b aufweisen; ein so ausgeführter Kartenkörper ist in Aufsicht in Fig. 8b veranschaulicht. Die transparenten Streifen 2a können dabei ohne weiteres insbesondere auch an den Rändern des Kartenkörpers 101, 201 liegen. Der transparente Streifen kann auch sehr schmal nach dem Vorbild von Banknoten als schmaler Sicherheitsstreifensausgeführt sein und mit zusätzlichem Sicherheitsmerkmalen versehen sein. Zum Aufbau eines derartigen Kartenkörpers 101, 201 kann in einfacher Weise eine in Fig. 1 bis Fig. 3 dargestellte Folienstrukturein- oder beidseitig mit weiteren transparenten Schichten belegt werden, so daß die vorgegebene Stärke erreicht wird. Alternativ können mehrere gleichartige Folienstrukturen wie in Fig. 1 bis Fig. 3 dargestellt übereinander gelegt werden. Ferner kann selbstverständlich einfach eine Monofolie in der Stärke der der fertigen Karte mit der gewünschten Streifenanordnung hergestellt werden.

Durch die Verwendung von erfindungsgemäß basierend auf Coextrusion hergestellten Kartenkörperfolien können auf einfache Weise verschiedene Varianten von unterschiedlich ausgestalteten Kartenkörpern gebildet werden. Insbesondere können mit entsprechenden Zusätzen in den einzelnen unterschiedlichen Schmelzeströmen der Extruder verschiedene lokal begrenzte Effekte in den Kartenkörpern erzeugt werden, wie z.B. Lichteffekte, Colourshift-Effekte und dergleichen. Weitere Lichteffekte können durch entsprechende Bedruckung der Folien erreicht werden. Die einzelnen Materialien, aus denen die Streifen 2a, 2b der Folie 2 gemäß Fig. 1 bis Fig. 3 bestehen, können auf dem gleichen Basismaterial beruhen, wobei jedoch unterschiedliche Additive für Streifen 2a und 2b hinzugefügt sind. Ebenso können vollkommen unterschiedliche Polymermaterialien für die einzelnen Streifen 2a und 2b verwendet werden. Auch die Folien 3 und 4 gemäß Fig. 2 und Fig. 3 können gegebenenfalls aus unterschiedlichen Materialien bzw. aus Materialien mit verschiedenen Additiven bestehen.

Mithilfe des erfindungsgemäßen Coextrusionsverfahren können beispielsweise Kartenkörper für ein elektronisches Passdokument hergestellt werden. Dabei ist der Kartenkörper aus einem Material gebildet, welches im Nahtbereich des Passes flexibel ist, um hierdurch ein gutes Umblättern des Passdokuments zu gewährleisten. Demgegenüber wird der Bereich des Kartenkörpers, auf dem sich die personenbezogenen Daten des Passes befinden, durch ein Material gebildet, welches eine gewisse Steifigkeit aufweist, um hierdurch die Stabilität des Dokuments zu erhöhen. Ebenso können bei Karten mit Biegeachsen mit Hilfe von Coextrusion die Bereiche entlang der Biegeachse aus strapazierfähigerem Material hergestellt werden als die anderen Bereiche. Diejenigen Materialbereiche, welche nicht entlang der Biegeachse liegen und somit eine geringere Beständigkeit aufweisen müssen, können aus preisgünstigerem, weniger stabilem Material hergestellt sein. Auf diese Weise werden die Kosten bei der Herstellung des Kartenkörpers verringert.

Wie oben dargelegt, können die einzelnen Streifen 2a bzw. 2b der Folie 2 gemäß Fig. 1 bis 3 aus dem gleichen Polymerbasismaterial mit unterschiedlichen Zusatzstoffen gebildet sein. Beispielsweise können für die opaken Bereiche 2a entsprechende Farbstoffe hinzugesetzt werden. Ebenso können die transparenten Bereiche 2b nicht komplett transparent, sondern lediglich teilweise transmittierend, d.h. transluzent, ausgestaltet sein, wobei diese Bereiche gegebenenfalls auch eingefärbt bzw. pigmentiert sein können. Ebenso können die einzelnen Streifen polarisierende Eigenschaften aufweisen. Gegebenenfalls können die Streifen 2a und 2b auch aus unterschiedlichen Polymermaterialien bestehen. Besonders bevorzugt kommen als Kunststoffmaterialien für die einzelnen Streifen der Folie 2 bzw. auch für die Folien 3 und 4 folgende Kunststoffe alleine oder in Kombination in Betracht: Polycarbonat, PET, PETG, TPE, TPU, Polyolefine, PA, PVC und ABS.

Weitere Effekte lassen sich dadurch erzielen, dass die entsprechenden Übergänge zwischen den unterschiedlichen Materialien je nach Anwendungsfall geeignet ausgestaltet werden, z.B. fließend oder scharf. Die Folien 3 und 4 gemäß den Ausführungsformen der Fig. 2 und Fig. 3 können gegebenenfalls eingefärbt sein, um so z.B. transluzente Anwendungen zu kreieren oder farbige Abstufungen im Durchlicht zu erzeugen.

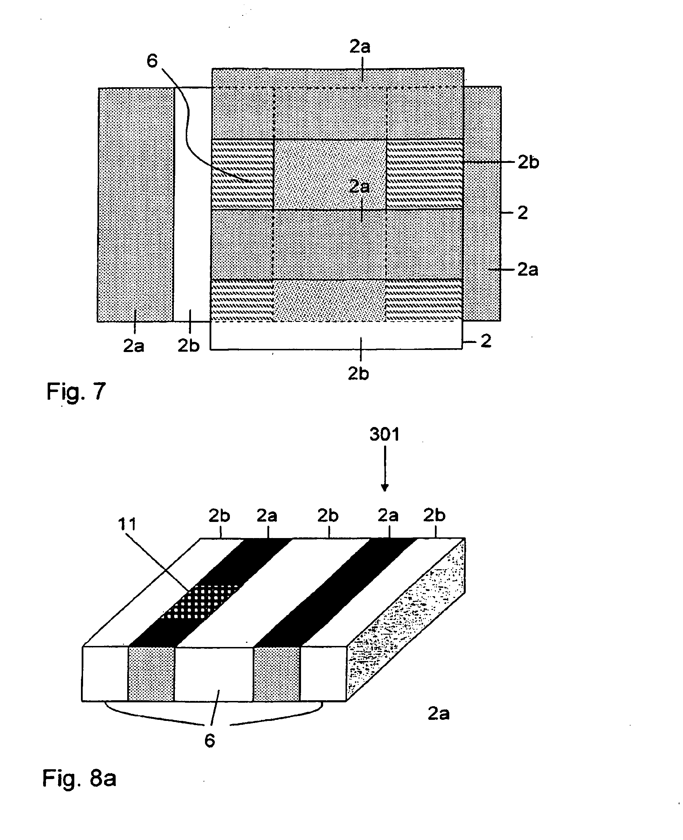

In einer besonders bevorzugten Ausführungsform der Erfindung werden Kartenkörper aus einer Mehrzahl von coextrudierten Folienstrukturen mit unterschiedlichen Flächenbereichen aufgebaut. Dies ist in der Ausführungsform gemäß Fig. 7 angedeutet, wobei in diesem Beispiel zwei gleichartige coextrudierte Folienstrukturen mit abwechselnd opaken und transparenten Streifen 2a, 2b übereinander angeordnet sind. Die einzelnen coextrudierten Folienstrukturen entsprechen dabei im Aufbau einer coextrudierten Folienstruktur gemäß den Fig. 1 bis 3. Durch Versatz bzw. Verdrehung der Folienstrukturen zueinander lassen sich Kartenkörper mit transparenten Fenstern erzeugen. Gemäß Fig. 7 entstehen solche transparenten Fenster 6 dadurch, dass die Streifen der unteren Folienstruktur um 90° gegenüber den Streifen der oberen Folienstruktur verdreht sind. In den Überlappungsbereichen zwischen den transparenten Streifen 2b der unteren und der oberen Folienstruktur ist der Gesamtaufbau transparent und es entstehen Fenster. Das Aufbauprinzip ist nicht auf zwei Folienstrukturen oder eine orthogonale Ausrichtung der übereinander plazierten Folienstrukturen beschränkt. Vielmehr können mehr als zwei Folienstrukturen übereinander aufgebracht werden, wobei die Breite der transparenten Streifen 2b von Folie zu Folie variieren kann. Durch geeignete Übereinanderlage mehrerer Folienstrukturen läßt sich dabei ein Kartenkörper mit Bereichen unterschiedlicher Opazität schaffen. Beispielsweise kann ein Fenster, d.h. ein transparenter Bereich, erzeugt werden, der von halbtransparenten Bereichen flankiert ist. Auch lassen sich durch geeignetes Übereinanderlegen von halbtransparenten farbigen Folienstrukturen unterschiedliche Abstufungen der Farbe erzeugen.

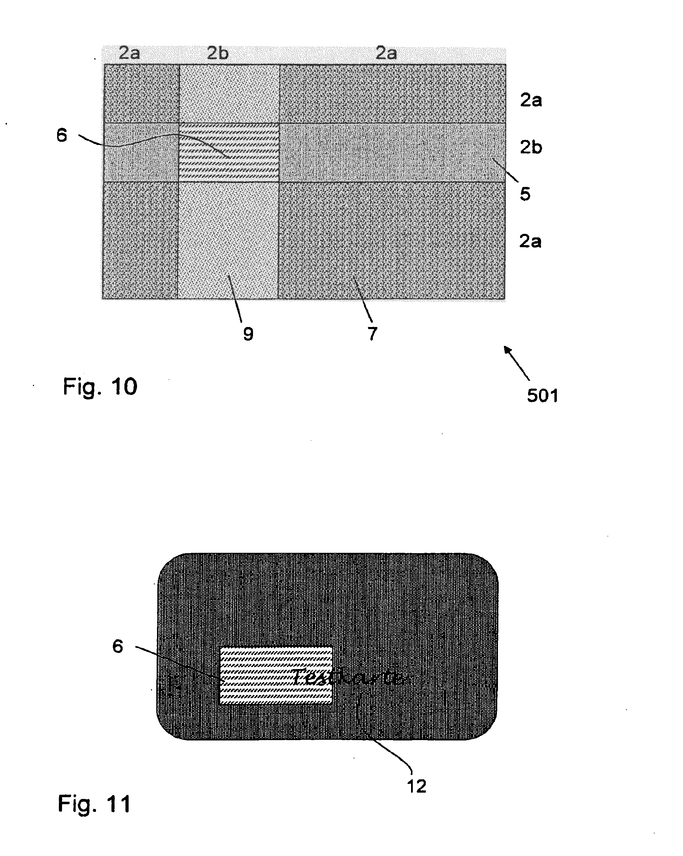

Fig. 10 zeigt einen Kartenkörper 501, der durch orthogonales Übereinanderlegen zweier Folienstrukturen mit unterschiedlich breiten Streifen 2a, 2b aufgebaut wurde, wobei die Opazität der beiden opaken Streifen nicht gleich sein muss. Der entstandene Kartenkörper 501 besitzt einen Fensterbereich 6, in dem sich die transmittierenden Streifen 2b der Folienstrukturen überlagern, vier Bereiche 7 mit der größten Opazität, in denen sich jeweils opake Streifen überlagern, zwei Bereiche 8 mit mittelgroßer Opazität, in denen sich jeweils ein transmittierender Streifen 2b und ein höher opaker Streifen 2a überlagern, sowie zwei Bereiche 9 mit kleiner Opazität, in denen sich jeweils ein transmittierender Streifen 2b und ein niedrig opaker Streifen 2a überlagern.

Der Aufbau eines Kartenkörpers oder einer Teilschicht eines Kartenkörpers aus einer Folienstruktur kann dabei anstelle aus mehreren separaten Folienstrukturen auch aus einer einzelnen zusammenhängenden Folienstruktur erfolgen, die übereinandergefaltet wird. Beispielsweise könnte der in Fig. 7 gezeigte Aufbau durch Falten einer einzigen langgestreckten Folienstruktur erfolgen.

Die Folienstrukturen können vor dem Verbinden zu einem Kartenkörper einzeln mit gleichartigen oder individuellen graphischen Elementen versehen werden. Beispielsweise kann auf eine oder mehrere Folienstrukturen ein Designdruck und/ oder alphanumerische Zeichen aufgebracht werden. Diese können in allen Folienstrukturen übereinstimmend oder auch unterschiedlich sein. Zeichen und Druck können so gestaltet sein, daß sich durch Übereinanderlegen mehrere bedruckter Folienstrukturen ein besonderer Effekt ergibt. Desweiteren können die Folienstrukturen einzeln oder alle mit physikalisch wirkenden Merkmalen ausgestattet sein, wobei wiederum vorgesehen sein kann, daß erst die Übereinanderlage zu einem beabsichtigten Effekt führt.

Beispielsweise lassen sich so durch passergenaue Übereinanderlage von zwei oder mehr Folienstrukturen, die jeweils einen Teil oder eine Teilfarbe eines graphischen Elementes zeigen, sehr einfach ein Registereffekt erzeugen, der ein graphisches Element zeigt, das nur im Durchlicht oder nur im Auflicht von einer bestimmten Seite aus vollständig erkennbar ist.

In einer anderen, in Fig. 11 angedeuteten Ausführungsform wurde eine innen im Kartenkörper liegende transparente Folienstruktur, bei der es sich auch um eine Folienstruktur gemäß den Fig. 2 oder Fig. 3 handeln kann, mit alphanumerischen Zeichen in Form eines Schriftzuges versehen und anschließend mit einer oder mehreren coextrudierten Folienstrukturen gemäß Fig. 1 bis Fig. 3 verbunden, so daß ein Fenster 6 entsteht. Die nicht transmittierenden Bereiche der coextrudierten Folienstruktur sind dabei halbtransparent oder zumindest im Gegenlicht durchscheinend. Der Schriftzug 12 ist so plaziert, daß er teilweise in dem Fenster 6 und teilweise in dem nicht transparenten Bereich des Kartenkörpers liegt. Er wird dabei über den Rand des Fensters 6 hinweg ohne jede Unterbrechung fortgesetzt und eignet sich damit als leicht herstellbares Echtheitsmerkmal.

In einer weiteren Ausführungsform wird der Kern eines Kartenkörpers mittels einer coextrudierten Folienstruktur gemäß Fig. 8a gebildet und dieser beidseitig mit zwei opaken Deckfolien abgedeckt. Es entsteht so ein Kartenkörper, der an zumindest an zwei Längsseiten eine deutlich erkennbare Farb- bzw. Materialstruktur zeigt, ohne daß hierzu eine besondere Einfärbung oder Bearbeitung der Kartenkörperseitenränder erforderlich ist. Ebenso läßt sich leicht ein Fenster 6 herstellen, dessen Innenrahmen eine Streifenfärbung zeigt. Ein transparenter Streifen 2b kann dabei dazu genutzt werden, von der Seite eines Kartenkörpers eingeleitetes Licht zu einem Fenster oder auch zur gegenüberliegenden Seite zu leiten.

Gegebenenfalls kann die Oberfläche des Kartenkörpers in Teilbereichen bedruckt sein. Fig. 8a zeigt den Aufbau eines Kartenkörpers 301 mit einer Bedruckung. Der Kartenkörper 301 umfasst eine Mehrzahl von (nicht einzeln gezeigten) Folienstruktur mit übereinander liegenden opaken und transparenten Bereichen. Es entstehen hierdurch sich durch die Gesamtdicke des Kartenkörpers 301 erstreckende opake Streifen 2a sowie sich durch die Gesamtdicke des Kartenkörpers erstreckende Fenster 6, die durch transparente Streifen 2b gebildet sind. Der Kartenkörper 301 ist mit einem Druck 11 versehen, der in der Ausführungsform der Fig. 8 im opaken Bereich 2a aufgebracht ist. Der Druck 11 kann gegebenenfalls auch derart ausgestaltet sein, dass er nur im transparenten bzw. im transparenten und opaken Bereich des Kartenkörpers 301 liegt. Insbesondere kann die Bedruckung so ausgestaltet sein, dass sich entsprechende Fensterbereiche von vorbestimmter Größe auf den transparenten Streifen ergeben. Fig.8b zeigt einen Kartenkörper mit einem sich von einer Seitenkante zu einer gegenüberliegenden Seitenkante erstreckenden streifenartigen Fenster 6.

Fig. 9 zeigt eine weitere Ausführungsform eines erfindungsgemäßen Kartenkörpers 401, bei dem zu einer Oberseite hin Fensterbereiche 60 ausgebildet sind, welche sich nur teilweise in den Kartenkörper hinein und nicht durch diesen hindurch erstrecken. Solche nichtdurchgängigen, gefangenen Fensterbereiche 60 sind insbesondere von Vorteil, wenn ein Kartenkörper 401 später mit einem Linsenraster, wie einem MLI (Multiple Laser Image) oder einem CLI (Changeable Laser Image) versehen werden soll. Da die Ausbildung von MLI oder CLI-Strukturen eine den gewünschten Strukturradien entsprechende Mindeststärke an zugrundeliegendem, transparentem Material voraussetzt, kann durch die Ausbildung von Fenstern 60, wie in Fig. 9 gezeigt, eine größere Schichtdicke für die Aufnahme eines MLI oder eines CLI bereitgestellt werden als das der Fall ist, wenn für das MLI/CLI wie üblich nur eine dünne transparente Deckfolie zur Verfügung steht. Das erlaubt wiederum die Ausgestaltung eines MLIs bzw. CLIs mit größeren Linsenradien, wodurch die Herstellung der MLIs bzw. CLIs vereinfacht wird. Ein Kartenkörper wie in Fig. 9 gezeigt kann beispielsweise durch einen mehrschichtigen Aufbau gemäß Fig. 7 erzeugt werden. Die Generierung unterschiedlich großer Fensterbereiche 60 kann dabei beispielsweise durch eine Variation der Breite der transparenten bzw. opaken Streifen der Folienstruktur erreicht werden.

Wie sich aus den obigen Ausführungen ergibt, können durch die Verwendung von coextrudierten Folienstrukturen für Kartenkörper viele unterschiedliche Varianten von tragbaren Datenträgern mit entsprechenden Eigenschaften im Hinblick auf Optik und Materialbeschaffenheit auf einfache Weise realisiert werden.

## Patentansprüche

1. Kartenkörper, insbesondere zur Herstellung einer Chip- und/ oder Magnetstreifenkarte, dessen Aufbau wenigstens zwei coextrudierte Folien (2) umfaßt, die zumindest jeweils einen Flächenbereich (2a) mit hoher Opazität und einen Flächenbereich (2b) mit niedriger Opazität aufweisen, wobei die Folien (2) so übereinanderliegen, daß in zumindest einem Bereich (6) des Kartenkörpers Flächenbereiche (2b) kleinerer Opazität übereinander liegen und in einem angrenzenden Bereich (7, 9) ein Flächenbereich (2a) hoher Opazität und ein Flächenbereich (2b) niedriger Opazität, **dadurch gekennzeichnet, dass** die Folien (2) jeweils zumindest einen opaken und einen transmittierenden Flächenbereich (2b) aufweisen und die Opazität der opaken Flächenbereiche (2a) zumindest einer Folie (2) größer ist als die Opazität zumindest einer anderen Folie (2), so daß der Kartenkörper (501) einen durch Überlagerung transmittierender Flächenbereiche gebildeten Fensterbereich (6) sowie außerhalb davon Bereiche (7, 8, 9) mit gestufter Opazität aufweist.

2. Kartenkörper nach Anspruch 1, **dadurch gekennzeichnet, daß** jeweils zumindest ein transmittierender Flächenbereich (2b) transparent ist, so dass der Kartenkörper zumindest einen Fensterbereich (6) aufweist.

3. Kartenkörper nach Anspruch 1, **dadurch gekennzeichnet, dass** die Folien (2) derart übereinander angeordnet sind, dass der Kartenkörper (401) zumindest einen Fensterbereich (60) aufweist, in dem ein transmittierender Flächenbereich (2b) einer coextrudierten Folie (2) über einem opaken Flächenbereich (2a) einer anderen Folie (2) liegt.

4. Kartenkörper nach einem der vorhergehenden Ansprüche, **dadurch gekennzeichnet, dass** er mehrere übereinanderliegende Folien (2, 3, 4) aufweist, die durch Coextrusion ausgebildet sind und eine Folienstruktur bilden, wobei zumindest eine Folie (3, 4) nur aus einem einheitlichen Material besteht und nur einen Flächenbereich aufweist.

5. Kartenkörper nach einem der vorhergehenden Ansprüche, **dadurch gekennzeichnet, dass** zumindest eine Folie (2) oder Folienstruktur (101,201) in einem Flächenbereich, der unter einem transmittierenden Flächenbereich (2b) in der darüberliegenden Folie (2) liegt, mit graphischen Elementen (12), insbesondere alphanumerischen Zeichen versehen ist.

6. Kartenkörper nach Anspruch 5, **dadurch gekennzeichnet, dass** der transmittierende Flächenbereich (2b) in der darüberliegenden Folie (2) oder der darüberliegenden Folienstruktur (101, 201) ebenfalls mit graphischen Elementen (12), insbesondere alphanumerischen Zeichen, versehen ist, die so auf die darunterliegenden graphischen Elemente (12) aufeinander abgestimmt sind, daß eine optisch wahrnehmbare Wechselwirkung entsteht.

7. Kartenkörper nach einem der vorhergehenden Ansprüche, **dadurch gekennzeichnet, dass** zumindest eine Folie (2) in einem Flächenbereich mit graphischen Elementen (12), insbesondere alphanumerischen Zeichen (12), versehen ist und dieser Flächenbereich teilweise unter einem transparenten Flächenbereich (2b) der darüberliegenden Folie (2) und teilweise unter einem transluzenten oder nur im Gegenlicht durchscheinenden opaken Flächenbereich (2a) der darüberliegenden Folie (2) liegt.

8. Kartenkörper, insbesondere zur Herstellung einer Chip- und/ oder Magnetstreifenkarte, dessen Aufbau wenigstens eine coextrudierte Folie (2) umfaßt, die zumindest einen Flächenbereich (2a) mit einer ersten Materialeigenschaft und zumindest einen zweiten Flächenbereich (2b) mit einer zweiten Materialeigenschaft aufweist, **dadurch gekennzeichnet, dass** die wenigstens eine coextrudierte Folie (2) beidseitig mit opaken Deckfolien abgedeckt ist, so daß der Kartenkörper zumindest an zwei Längsseiten eine deutlich erkennbare Materialstruktur zeigt.

9. Tragbarer Datenträger, insbesondere Chip- und/oder Magnetstreifenkarte, mit einem Kartenkörper gemäß einem der vorhergehenden Ansprüche.

10. Verfahren zur Herstellung eines Kartenkörpers für einen tragbaren Datenträger, **dadurch gekennzeichnet, daß** durch Coextrusion zumindest zwei Folien (2) hergestellt werden, die jeweils aus zumindest zwei verschiedenen Polymermaterialien gebildet werden und zumindest jeweils einen höher opaken Flächenbereich (2a) und einen niedriger opaken Flächenbereich (2b) aufweisen, **dadurch gekennzeichnet, dass** die Folien (2) so übereinander angeordnet werden, daß der Kartenkörper eine gestufte Opazität mit Opazitätsstufen aufweist, welche durch Übereinanderlage zweier höher opaker Streifen bzw. eines niedriger und eines höher opaken bzw. zwei höher opaker Flächenbereiche (2a, 2b) gebildet werden, wobei die Folien (2) jeweils zumindest einen opaken und einen transmittierenden Flächenbereich (2b) aufweisen und die Opazität der opaken Flächenbereiche (2a) zumindest einer Folie (2) größer ist als die Opazität der Flächenbereiche (2a) zumindest einer anderen Folie (2), so daß der Kartenkörper (501) einen durch Überlagerung transmittierender Flächenbereiche gebildeten Fensterbereich (6) sowie außerhalb davon Bereiche (7, 8, 9) mit unterschiedlichen Opazitäten aufweist.

11. Verfahren nach Anspruch 10, **dadurch gekennzeichnet, daß** die durch Coextrusion hergestellten Folien jeweils aus zwei Lagen Folien (2, 3, 4) gebildet werden, wobei die erste Folie (2) aus zwei verschiedenen Polymermaterialien gebildet wird und die zweite Folie (3,4) vollflächig aus einem einzelnen Polymermaterial gebildet wird, wobei das Polymermaterial der zweiten Folie (3,4) dasselbe Polymermaterial ist und dieselbe Materialeigenschaft besitzt wie einer der Flächenbereiche (2a, 2b) der ersten Folie (2).

## Claims

1. A card body, in particular for manufacturing a chip card and/or magnetic strip card, whose structure comprises at least two coextruded foils (2) respectively having at least a surface area (2a) of high opacity and a surface area (2b) of low opacity, wherein the foils (2) are so disposed above each other that in at least an area (6) of the card body there are surface areas (2b) of lower opacity disposed above each other, and in an adjoining area (7, 9) a surface area (2a) of high opacity and a surface area (2b) of low opacity, **characterized in that** the foils (2) respectively have at least an opaque and a transmissive surface area (2b), and the opacity of the opaque surface areas (2a) of at least one foil (2) is higher than the opacity of at least one other foil (2), so that the card body (501) has a window area (6) formed by superimposing transmissive surface areas, as well as outside thereof areas (7, 8, 9) with graduated opacity.

2. The card body according to claim 1, **characterized in that** respectively at least a transmissive surface area (2b) is transparent, so that the card body has at least a window area (6).

3. The card body according to claim 1, **characterized in that** the foils (2) are arranged above each other in such a fashion that the card body (401) has at least a window area (60), in which a transmissive surface area (2b) of a coextruded foil (2) is disposed above an opaque surface area (2a) of a different foil (2).

4. The card body according to any of the preceding claims, **characterized in that** it has several foils (2, 3, 4) disposed above each other, which are formed by coextrusion and form a foil structure, wherein at least a foil (3, 4) consists only of a uniform material and has only one surface area.

5. The card body according to any of the preceding claims, **characterized in that** at least a foil (2) or foil structure (101, 201) in a surface area that is disposed below a transmissive surface area (2b) in the foil (2) disposed above is equipped with graphic elements (12), in particular alphanumeric characters.

6. The card body according to claim 5, **characterized in that** the transmissive surface area (2b) in the foil (2) disposed above or of the foil structure (101, 201) disposed above is also equipped with graphic elements (12), in particular alphanumeric characters, which are so adjusted to the graphic elements (12) disposed below that an optically perceivable interaction results.

7. The card body according to any of the preceding claims, **characterized in that** at least a foil (2) in a surface area is equipped with graphic elements (12), in particular alphanumeric characters (12), and this surface area is disposed partly below a transparent surface area (2b) of the foil (2) disposed above and partly below a surface area (2a) of the foil (2) disposed above, said surface area being translucent or opaque and translucent only against a backlight.

8. A card body, in particular for manufacturing a chip card and/or magnetic strip card, whose structure comprises at least a coextruded foil (2), which has at least a surface area (2a) with a first material property and at least a second surface area (2b) with a second material property, **characterized in that** the at least one coextruded foil (2) is covered on both sides with opaque cover foils, so that the card body shows a clearly recognizable material structure at least on two longitudinal sides.

9. A portable data carrier, in particular a chip card and/or or magnetic strip card with a card body according to any of the preceding claims.

10. A method for manufacturing a card body for a portable data carrier, **characterized in that** by coextrusion at least two foils (2) are produced which are respectively formed of at least two different polymer materials and respectively have at least a surface area (2a) of higher opacity and a surface area (2b) of lower opacity, **characterized in that** the foils (2) are so arranged above each other that the card body has a graduated opacity with opacity graduations, which are formed by superimposing two strips of higher opacity or of one of lower and one of higher opacity or two surface areas (2a, 2b) of higher opacity, wherein the foils (2) respectively have at least an opaque and a transmissive surface area (2b) and the opacity of the opaque surface areas (2a) of at least one foil (2) is higher than the opacity of the opaque surface areas (2a) of at least one other foil (2), so that the card body (501) has a window area (6) formed by superimposing transmissive surface areas, as well as outside thereof areas (7, 8, 9) with different opacities.

11. The method according to claim 10, **characterized in that** the foils manufactured by coextrusion are formed respectively of two layers of foils (2, 3, 4), wherein the first foil (2) is formed of two different polymer materials and the second foil (3, 4) is formed of a single polymer material over its full surface, wherein the polymer material of the second foil (3, 4) is the same polymer material and has the same material property as one of the surface areas (2a, 2b) of the first foil (2).

## Revendications

1. Corps de carte, notamment destiné à la fabrication d'une carte à puce et/ou à bande magnétique, dont l'agencement comprend au moins deux films coextrudés (2) qui comportent au moins respectivement une zone de surface (2a) à opacité élevée et une zone de surface (2b) à opacité faible, les films (2) se superposant de telle manière que, dans au moins une zone (6) du corps de carte, des zones de surface (2b) à opacité moindre se superposent, et, dans une zone adjacente (7, 9), une zone de surface (2a) à opacité élevée et une zone de surface (2b) à opacité faible, **caractérisé en ce que** les films (2) comportent respectivement au moins une zone de surface opaque et une transmettrice (2b) et **en ce que** l'opacité des zones de surface opaques (2a) d'au moins un film (2) est supérieure à l'opacité d'au moins un autre film (2), de telle sorte que le corps de carte (501) comporte une zone fenêtre (6) constituée par superposition de zones de surface transmettrices ainsi que, à l'extérieur de cela, des zones (7, 8, 9) à opacité échelonnée.

2. Corps de carte selon la revendication 1, **caractérisé en ce que** respectivement au moins une zone de surface (2b) transmettrice est transparente, de telle sorte que le corps de carte comporte au moins une zone fenêtre (6).

3. Corps de carte selon la revendication 1, **caractérisé en ce que** les films (2) sont agencés de telle façon de manière superposée les uns sur les autres que le corps de carte (401) comporte au moins une zone fenêtre (60) dans laquelle une zone de surface (2b) transmettrice d'un film coextrudé (2) se trouve par-dessus une zone de surface opaque (2a) d'un autre film (2).

4. Corps de carte selon une des revendications précédentes, **caractérisé en ce qu'**il comporte plusieurs films superposés (2, 3, 4) qui sont réalisés par coextrusion et constituent une structure en film, au moins un film (3, 4) n'étant composé que d'un matériau uniforme et ne comportant qu'une zone de surface.

5. Corps de carte selon une des revendications précédentes, **caractérisé en ce qu'**au moins un film (2) ou structure en film (101, 201), dans une zone de surface située en-dessous d'une zone de surface (2b) transmettrice dans le film (2) la recouvrant, est pourvue d'éléments graphiques (12), notamment de caractères alphanumériques.

6. Corps de carte selon la revendication 5, **caractérisé en ce que** la zone de surface (2b) transmettrice dans le film (2) la recouvrant ou dans la structure en film (101, 201) la recouvrant est également pourvue d'éléments graphiques (12), notamment de caractères alphanumériques, qui correspondent de telle manière aux éléments graphiques (12) situés en-dessous qu'une interaction visuellement perceptible est engendrée.

7. Corps de carte selon une des revendications précédentes, **caractérisé en ce qu'**au moins un film (2) dans une zone de surface est pourvu d'éléments graphiques (12), notamment de caractères alphanumériques (12), et **en ce que** cette zone de surface se trouve partiellement en-dessous d'une zone de surface (2b) transparente du film (2) la recouvrant et partiellement en-dessous d'une zone de surface (2a) opaque translucide ou uniquement translucide à contre-jour du film (2) la recouvrant.

8. Corps de carte, notamment destiné à la fabrication d'une carte à puce et/ou à bande magnétique, dont l'agencement comprend au moins un film coextrudé (2) qui comporte au moins une zone de surface (2a) ayant une première propriété de matériau et au moins une deuxième zone de surface (2b) ayant une deuxième propriété de matériau, **caractérisé en ce que** le au moins un film (2) coextrudé est recouvert des deux côtés par des films de recouvrement opaques, de telle sorte que le corps de carte présente au moins sur deux côtés longitudinaux une structure de matériau clairement reconnaissable.

9. Support de données portable, notamment carte à puce et/ou à bande magnétique, comportant un corps de carte selon une des revendications précédentes.

10. Procédé de fabrication d'un corps de carte pour un support de données portable, **caractérisé en ce que**, par coextrusion, au moins deux films (2) sont fabriqués, qui sont respectivement constitués d'au moins deux matériaux polymères différents et comportent au moins respectivement une zone de surface (2a) plus hautement opaque et une zone de surface (2b) moindrement opaque, **caractérisé en ce que** les films (2) sont agencés de telle manière les uns au-dessus des autres que le corps de carte présente une opacité échelonnée ayant des échelons d'opacité qui sont constitués par la superposition de deux rubans plus hautement opaque ou d'un moindrement et un plus hautement opaque ou bien de deux zones de surface (2a, 2b) plus hautement opaques, les films (2) comportant respectivement au moins une zone de surface (2b) opaque et une transmettrice et l'opacité des zones de surface opaques d'au moins un film (2) étant supérieure à l'opacité des zones de surface (2a) d'au moins un autre film (2), de telle sorte que le corps de carte (501) comporte une zone fenêtre (6) constituée par superposition de zones de surface transmettrices ainsi que, à l'extérieur de cela, des zones (7, 8, 9) à opacités différentes.

11. Procédé selon la revendication 10, **caractérisé en ce que** les films fabriqués par coextrusion sont respectivement constitués de deux couches de film (2, 3, 4), le premier film (2) étant constitué de deux matériaux polymères différents et le deuxième film (3, 4) étant constitué sur toute sa surface d'un matériau polymère unique, le matériau polymère du deuxième film (3, 4) étant le même matériau polymère et ayant la même propriété de matériau qu'une des zones de surface (2a, 2b) du premier film (2).
